# EUROPEAN PATENT SPECIFICATION

(11) **EP 3 239 654 B1**
(45) Date of publication and mention of the grant of the patent: **14.11.2018**
(21) Application number: 16743094.1
(22) Date of filing: 12.01.2016
(51) Int. Cl.: G01B 5/20, G01B 5/28

(54) **ROUNDNESS MEASUREMENT DEVICE**
RUNDUNGSMESSVORRICHTUNG
DISPOSITIF DE MESURE DE ROTONDITÉ

(30) Priority: 28.01.2015 JP 2015014383
(43) Date of publication of application: 01.11.2017
(73) Proprietor: Tokyo Seimitsu Co., Ltd., Tokyo 192-8515 (JP)
(72) Inventor: TAKANASHI, Ryo, Tsuchiura-city Ibaraki 300-0006 (JP)
(74) Representative: Grünecker Patent- und Rechtsanwälte PartG mbB
(86) International application number: PCT/JP2016/050715
(87) International publication number: WO 2016/121490

(56) References cited:
- EP-A2- 2 312 262
- JP-A- 2008 070 181
- JP-A- 2011 208 994
- JP-A- 2013 108 757
- US-A- 4 679 326
- US-A1- 2011 005 095

## Description

### {Technical Field}

The present invention relates to a roundness measurement device, and more particularly, relates to a roundness measurement device that brings a stylus tip into contact with a surface of a workpiece rotatably arranged on a table, and detects, with a detector, displacement of the stylus tip according to a rotation angle.

### {Background Art}

A conventional roundness measurement device has a radial direction moving arm that moves in a radial direction with respect to a workpiece that has a cylindrical surface and is placed on a rotating table, and a detector (measuring probe) is mounted via a detector holder to a tip end of the radial direction moving arm, as described in PTL 1.

When performing measurements related to roundness, such as roundness, concentricity, or coaxiality, of the cylindrical surface of the workpiece, the radial direction moving arm is moved to bring the stylus of the detector into contact with the cylindrical surface, and displacement of the stylus is detected while rotating the workpiece with the rotating table.
EP 2 312 262 A2 discloses a surface texture measuring machine including a stage, a contact-type detector, an image probe, a relative movement mechanism, and a controller.

### {Citation List}

### {Patent Literature}

PTL 1: Japanese Patent Application Laid-Open No. 2006-145344

### {Summary of Invention}

### {Technical Problem}

In a roundness measurement device such as that described in PTL 1, the detector is arranged, via the detector holder, farther to the tip end side than the tip end of the radial direction moving arm. Therefore, there is a space between the detector and the radial direction moving arm, and consequently, the device is larger in size by that amount, which is a disadvantage.

In view of such circumstances, the present invention aims to provide a roundness measurement device that can be made smaller in size.

### {Solution to Problem}

In order to achieve the foregoing object, a roundness measurement device according to claim 1 or claim 3 is provided.

With this device, an outer peripheral surface of the object to be measured that has a cylindrical shape or a columnar shaped can be measured, with narrowing a distance between the detector holder (detector) and the turning arm, as an outer diameter of the object to be measured becomes larger. Therefore, the distance between the column and the stage can be narrower, so the device can be made smaller in size.

Further, because the turning arm is arranged on the stage side of the column, a protrusion amount of the radial direction arm that protrudes toward the side opposite the stage with respect to the column can be reduced, compared to a case where a radial direction arm that moves the detector in the radial direction is provided on the carriage. Therefore, the measurement space required for measuring can be reduced, so the size of the device including this measurement space can be reduced.

According to claims, the detector holder is fixed to a tip end portion of the radial direction arm, and the radial direction arm is supported on the tip end portion of the turning arm, movably in the radial direction.

In the roundness measurement device according to another aspect of the present invention, the radial direction arm may include a rack gear formed along the radial direction, and the turning arm may include a pinion gear that is manually rotated and engages with the rack gear.

In the roundness measurement device according to claim 3, in the detector holder supporting mechanism, the radial direction arm is fixed to the tip end portion of the turning arm, and the detector holder is supported movably along the radial direction arm.

### {Advantageous Effects of Invention}

According to the present invention, the roundness measurement device can be made smaller in size.

### {Brief Description of Drawings}

Figure 1 is a perspective view of the overall configuration of the roundness measurement device according to the present invention.
Figure 2 is a perspective view of a radial direction moving arm and an upper end portion of a turning arm.
Figure 3 is a sectional view of the radial direction moving arm and the upper end portion of the turning arm in a direction perpendicular to a radial direction.
Figure 4 is a front view of the roundness measurement device, which shows a state in which a stylus is brought into contact with an upper side outer peripheral surface of a workpiece.
Figure 5 is a perspective view of the roundness measurement device, which shows a state in which the stylus is brought into contact with the upper side outer peripheral surface of the workpiece.
Figure 6 is a front view of the roundness measurement device, which shows a state in which the stylus is brought into contact with the upper side outer peripheral surface of the workpiece.
Figure 7 is a perspective view of the roundness measurement device, which shows a state in which the stylus is brought into contact with the upper side outer peripheral surface of the workpiece.
Figure 8 is a front view of the roundness measurement device, which shows a state in which the stylus is brought into contact with an inner peripheral surface of the workpiece.
Figure 9 is a perspective view of the roundness measurement device, which shows a state in which the stylus is brought into contact with the inner peripheral surface of the workpiece.
Figure 10 is a front view of the roundness measurement device, which shows a state in which the stylus is brought into contact with a lower side outer peripheral surface of the workpiece.
Figure 11 is a perspective view of the roundness measurement device, which shows a state in which the stylus is brought into contact with the lower side outer peripheral surface of the workpiece.
Figure 12 is a front view of a conventional non-claimed roundness measurement device as a comparative example, which shows a state in which a stylus is brought into contact with an outer peripheral surface of a workpiece.
Figure 13 is a front view of the conventional non-claimed roundness measurement device as a comparative example, which shows a state in which the stylus is brought into contact with an inner peripheral surface of the workpiece.
Figure 14 is a front view of a roundness measurement device according to the embodiment, which shows a state in which a stylus is brought into contact with an outer peripheral surface of a workpiece.
Figure 15 is a front view of the roundness measurement device according to the embodiment, which shows a state in which the stylus is brought into contact with an inner peripheral surface of the workpiece in Figure 12.
Figure 16 is a view comparing a measurement space of the conventional roundness measurement device in Figure 12 with a measurement space of the roundness measurement device of the embodiment in Figure 14.
Figure 17 is a simplified view of another embodiment of a detector holder supporting mechanism.
Figure 18 is a front view of the roundness measurement device, which shows a state in which the stylus is brought into contact with an upper surface of a flange portion of a workpiece.
Figure 19 is a perspective view of the roundness measurement device, which shows a state in which the stylus is brought into contact with the upper surface of the flange portion of the workpiece.
Figure 20 is a front view of the roundness measurement device, which shows a state in which the stylus is brought into contact with a lower surface of the flange portion of the workpiece.
Figure 21 is a perspective view of the roundness measurement device, which shows a state in which the stylus is brought into contact with the lower surface of the flange portion of the workpiece.

### {Description of Embodiments}

Hereinafter, preferable embodiments of the present invention will be described in detail with reference to the accompanying drawings.

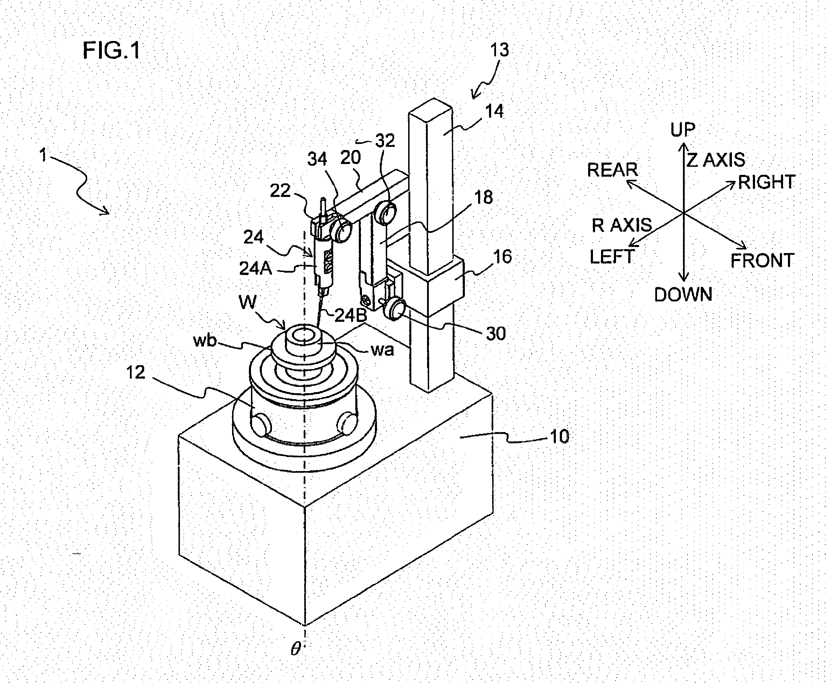

Figure 1 is a perspective view of the overall configuration of the roundness measurement device according to the present invention.

The roundness measurement device 1 shown in Figure 1 includes a base 10 that has a table-like shape and supports the entire device, on a lower end portion. The base 10 has, on an upper surface thereof, a stage 12 that is rotatable in a direction around a rotation axis (θ axis) extending along a vertical direction (Z axis direction). A workpiece W having a columnar shape or a cylindrical shape, which is an object to be measured, is placed on an upper surface of this stage 12. In addition, the workpiece W is placed such that a central axis of the workpiece W is coaxial with the rotation axis of the stage 12. The workpiece W in Figure 1 is an example of a workpiece that has a cylindrical portion wa having a constant outside diameter and a constant inside diameter, and a flange portion wb that is formed in an annular shape and protrudes radially outward from an outer peripheral surface of the cylindrical portion wa.

Inside the base 10, there is provided a rotation drive portion (not shown in Figure 1) including a motor or the like which is connected to the stage 12 and rotationally drives the stage 12.

The workpiece W that is placed on the stage 12 is rotated in a direction around the θ axis together with the stage 12 by the rotation drive portion.

Here, the stage 12 may be rotated manually. Further, the stage 12 may be movable by a rotational operation of a knob or the like in a left-right direction and a front-rear direction which are perpendicular to the θ axis and are orthogonal to each other.

A detector 24 (measuring probe) is supported on the upper surface side of the base 10 via a detector supporting mechanism 13 that includes a column 14, a carriage 16, a turning arm 18, a radial direction moving arm 20, and a detector holder 22.

The detector 24 includes, for example, a stylus (gauge head) 24B that has a rod-shape and extends from a lower end of a cylindrical-shaped detector main body 24A, and a displacement detecting portion (not shown in Figure 1) that is provided inside the detector main body 24A and detects a displacement amount of the stylus 24B with a differential transformer or the like to output the detected displacement amount as an electrical signal. The stylus 24B is supported by the detector main body 24A in a manner such that an axis of the stylus 24B is able to be displaced in a direction (a displacement direction) orthogonal to that axis in one plane. The stylus 24B is urged by a spring or the, like in one direction (urging direction) of the displacement directions.

Regarding the detector supporting mechanism 13, the column 14 that extends along the vertical direction is erected on the right side of the stage 12 on the upper surface of the base 10. The carriage 16 that is movable vertically along the column 14 is supported by the column 14. The carriage 16 is moved vertically by the driving of a motor, for example. The carriage 16 may also be moved manually by a rotating operation of a knob or the like.

The detector supporting mechanism 13 supports the detector 24 in a manner that the vertical position of the detector 24 can be changed by the vertical direction movement mechanism of this carriage 16.

One end (a base end) of the turning arm 18 is connected to the carriage 16, on the left side (the stage 12 side) of the column 14, in a manner that the turning arm 18 can turn around a pivot axis along the left-right direction. The turning arm 18 is formed in a rectangular prism shape. The direction of the turning arm 18 can be changed by loosening a screw by a rotating operation of a knob 30 and turn the turning arm 18 around the pivot axis. The left-right direction is a radial direction that corresponds to a radial direction (R axis direction) centered on the rotation axis (θ axis) of the stage 12, i.e., that corresponds to a direction toward the rotation axis of the stage 12 from the position of the pivot axis of the carriage 16 (and the direction opposite this direction). The left-right direction is referred to as the radial direction.

The detector supporting mechanism 13 supports the detector 24 in a manner that a turning angle around the pivot axis extending along the radial direction can be changed by the turning mechanism for the turning arm 18.

The radial direction moving arm 20 that extends in the radial direction is supported on a tip end portion of the turning arm 18 so as to be movable in the radial direction. The radial direction moving arm 20 moves, in response to a rotation operation of the knob 32, in a direction according to that rotation direction.

The detector supporting mechanism 13 supports the detector 24 in a manner that the position (radial position) of the detector 24 in the radial direction can be changed by the radial direction movement mechanism of the radial direction moving arm 20.

The detector holder 22 is fixed to the tip end of the radial direction moving arm 20. The detector 24 is attached to the detector holder 22 so as to be attachable and detachable by a rotating operation of a knob 34. The detector holder 22 holds a base end side of the detector 24 such that a tip end side (the side on which the stylus 24B is provided) of the detector 24 is directed toward the axis line of the pivot axis of the turning arm 18, and such that the axis line of the detector main body 24A is parallel to the axis line of the turning arm 18. In addition, the detector holder 22 can hold the detector 24 with changing a mounting angle of the detector 24, i.e., a rotation angle around the axis line of the detector main body 24A. The displacement direction and the urging direction of the stylus 24B can be adjusted by the mounting angle adjustment mechanism for the detector 24 in the detector holder 22.

Next, the configuration of the radial direction movement mechanism of the radial direction moving arm 20 will be described.

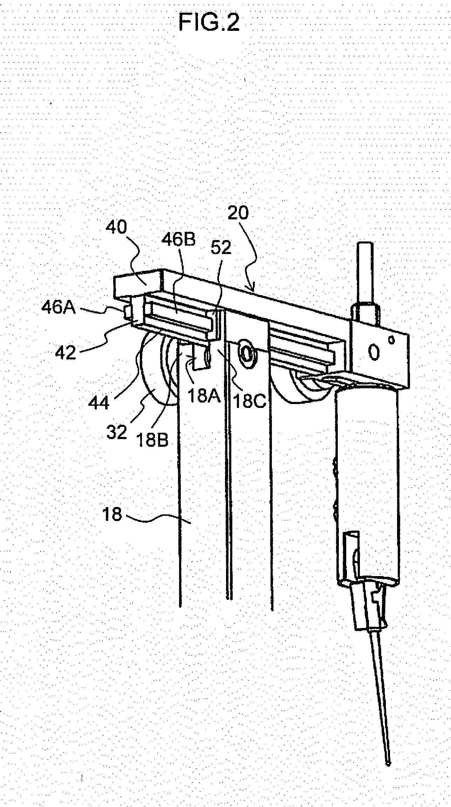

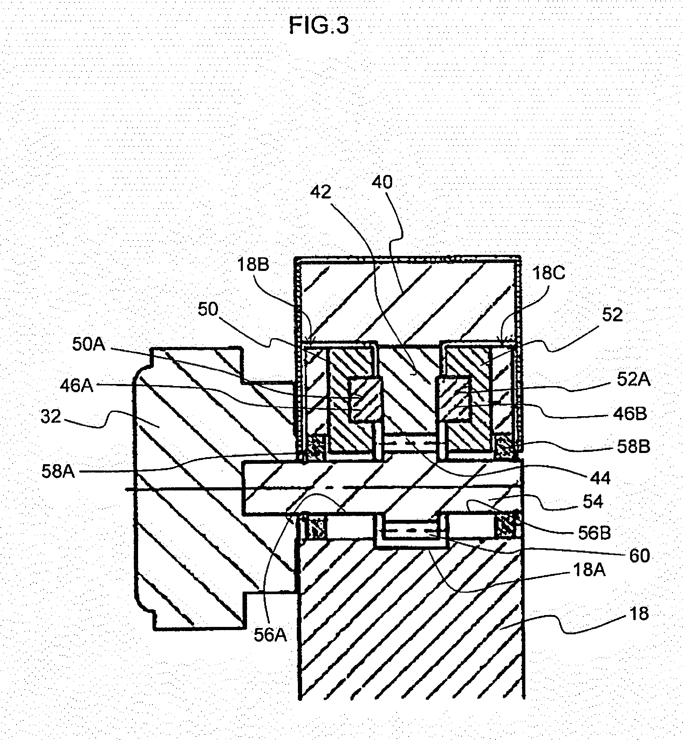

Figure 2 is a perspective view of the radial direction moving arm 20 and an upper end portion of the turning arm 18. Figure 3 is a sectional view of a cross-section that includes the axis line of the turning arm 18 and is perpendicular to the radial direction.

As shown in these drawings, the radial direction moving arm 20 has an arm main body 40 that has a rectangular prism shape and extends along the radial direction.

A rack member 42 which has a rectangular prism shape and extends along the radial direction is fixed to a side surface which is along the radial direction in the arm main body 40a and is on the pivot axis side of the turning arm 18.

A rack gear 44 that meshes with a pinion gear 60, described later, is formed on a side surface which is along the radial direction in the rack member 42 and is on the pivot axis side of the turning arm 18.

Rail members 46A, 46B, each of which has a rectangular prism shape and extends along the radial direction, are respectively fixed to two side surfaces that are opposite to each other, are along the radial direction of the rack member 42, and face a direction around the pivot axis of the turning arm 18.

The rail members 46A, 46B are respectively engaged with the tip end portion of the turning arm 18 to be supported movably in the radial direction.

The tip end portion of the turning arm 18 has protruding portions 18B, 18C which protrude in a forked shape with a groove 18A formed along the radial direction interposed therebetween. Straight guides 50, 52 are embedded in these protruding portions 18B, 18C. In the straight guides 50, 52, guide grooves 50A, 52A are respectively formed along the radial direction.

Also, the rack member 42 for the radial direction moving arm 20 is inserted into the groove 18A between the protruding portions 18B, 18C so as to be movable in the radial direction. In addition, the rail members 46A, 46B of the rack member 42 are respectively inserted into the guide grooves 50A, 52A of the straight guides 50, 52 so as to be movable in the radial direction.

Thus, the radial direction moving arm 20is supported on the tip end portion of the turning arm 18 so as to be movable in the radial direction.

A rotating member 54 that extends along a direction perpendicular to the radial direction and the axial direction of the turning arm 18, is arranged in the groove 18A of the tip end portion of the turning arm 18. Holes 56A, 56B into which the rotating member 54 is inserted are formed in the protruding portions 18B, 18C, respectively. In addition, bearings 58A, 58B are provided in these holes 56A, 56B. The rotating member 54 is rotatably supported by the bearings 58A, 58B.

In the rotating member 54, a pinion gear 60 is formed on a portion that faces a rack gear 44 formed on the rack member 42 of the radial direction moving arm 20, and the pinion gear 60 meshes with the rack gear 44.

In addition, one end portion of the rotating member 54 is inserted through the hole 56A in the protruding portion 18B and protrudes out from the hole 56A, and the knob 32 is fixed to this protruding portion.

Thus, the pinion gear 60 rotates via the rotating member 54 by rotating the knob 32. The rotation of the pinion gear 60 moves the radial direction moving arm 20 in the radial direction, via the engagement between the pinion gear 60 and the rack gear 44.

The configuration of the radial direction movement mechanism of the radial direction moving arm 20 in this embodiment is an example. The radial direction movement mechanism may have any suitable configuration. Moreover, the radial direction moving arm 20 may be moved in the radial direction by driving a motor. Similarly, the turning arm 18 may be turned by driving a motor.

According to the detector supporting mechanism 13 of the roundness measurement device 1 configured as described above, the vertical position of the carriage 16 can be adjusted so that the position in the vertical direction (the Z axis direction) of the tip end of the stylus 24B of the detector 24 can be adjusted, by moving the carriage 16 in the vertical direction with the vertical direction movement mechanism for the carriage 16.

Moreover, the radial position of the radial direction moving arm 20 can be adjusted so that the position in the radial direction (the R axis direction) of the stylus 24B can be adjusted, by moving the radial direction moving arm 20 in the radial direction with the radial direction movement mechanism for the radial direction moving arm 20.

Further, the turning angle of the turning arm 18 can be adjusted so that the angle of the axis line of the stylus 24B in the direction around the pivot axis can be adjusted, by turning the turning arm 18 in the direction around the pivot axis with the turning mechanism of the turning arm 18.

A mode in which the position in the front-rear direction of the tip end of the stylus 24B can be adjusted by enabling the pivot axis of the turning arm 18 to move in a front-rear direction perpendicular to the vertical direction (the Z axis direction) and the radial direction (the R axis direction), with respect to the carriage 16, may also be employed. However, in this embodiment, it is assumed that the pivot axis is fixed with respect to the carriage 16.

Next, a method for bringing the tip end of the stylus 24B of the detector 24 into contact with each surface of the workpiece W having the cylindrical portion wa and the flange portion wb shown in Figure 1 by the detector supporting mechanism 13 when measuring the roundness and the like of each surface with the roundness measurement device 1 described above will be described.

The workpiece W is placed on the stage 12 such that the central axis of the workpiece W is coaxial with the rotation axis (θ axis) of the stage 12.

Then, the vertical position of the carriage 16 in the detector supporting mechanism 13, the radial position of the radial direction moving arm 20, the turning angle of the turning arm 18, and the mounting angle of the detector 24 in the detector holder 22 are set such that the tip end of the stylus 24B contacts a surface to be measured. In addition, the displacement direction of the stylus 24B is set to be a direction perpendicular to the surface to be measured, and the urging direction of the stylus 24B is set to be a direction toward the surface to be measured.

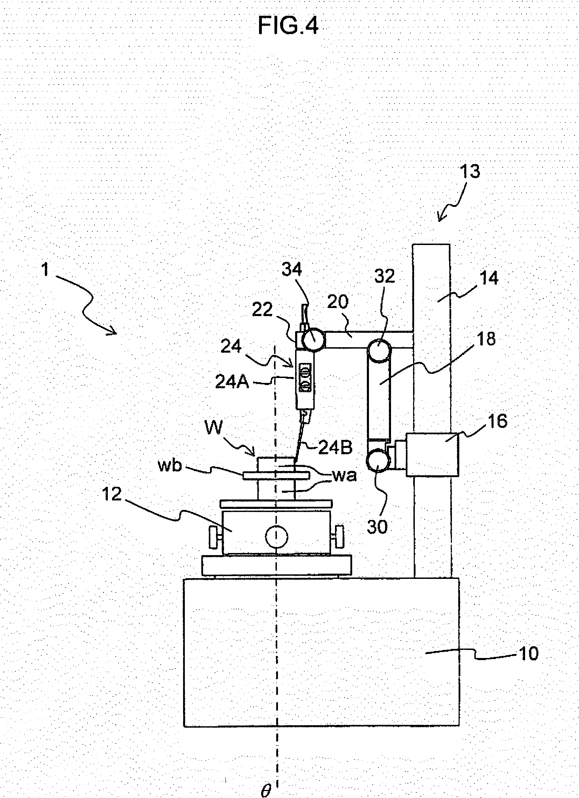

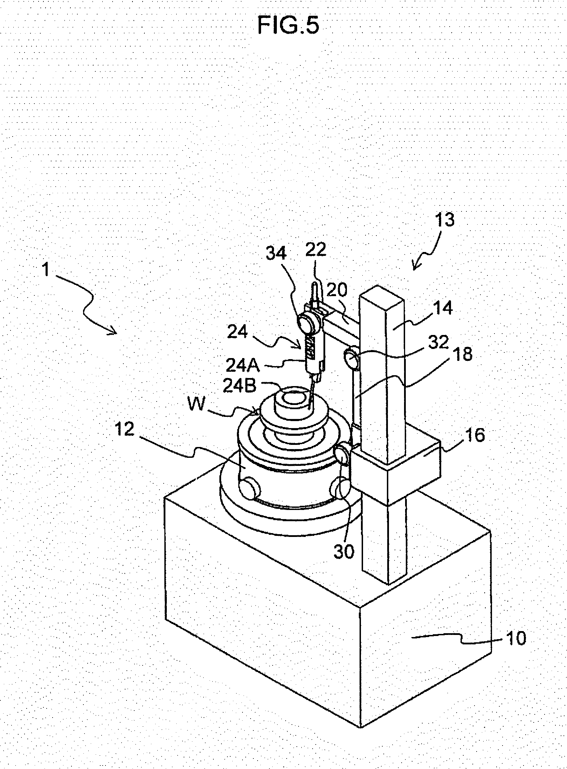

At this time, when an outer peripheral surface of the cylindrical portion wa of the workpiece W, the outer peripheral surface located above the flange portion wb (i.e., an upper side outer peripheral surface), is to be measured, the turning arm 18 is set to a turning angle (0 degrees) that is upward in the vertical direction (the Z axis direction), as shown in Figure 4 and Figure 5.

In addition, the detector 24 is held by the detector holder 22 at a mounting angle such that the displacement direction of the stylus 24B is in the radial direction, and the urging direction of the stylus 24B is in a direction opposite the direction toward the turning arm 18.

Then, the position of the carriage 16 in the vertical direction and the position of the radial direction moving arm 20 in the radial direction are set to positions at which the tip end of the stylus 24B contacts the upper side outer peripheral surface, which is the surface to be measured, of the workpiece W.

Thus, the roundness and the like of the upper side outer peripheral surface of the workpiece W can be measured by obtaining the displacement amount of the stylus 24B detected by the detector 24 while the workpiece W is rotated by the rotation of the stage 12, or the like.

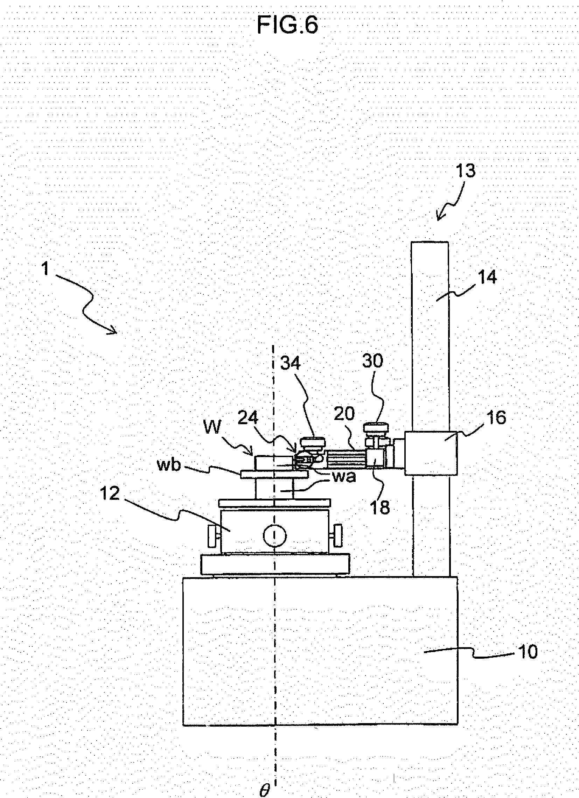

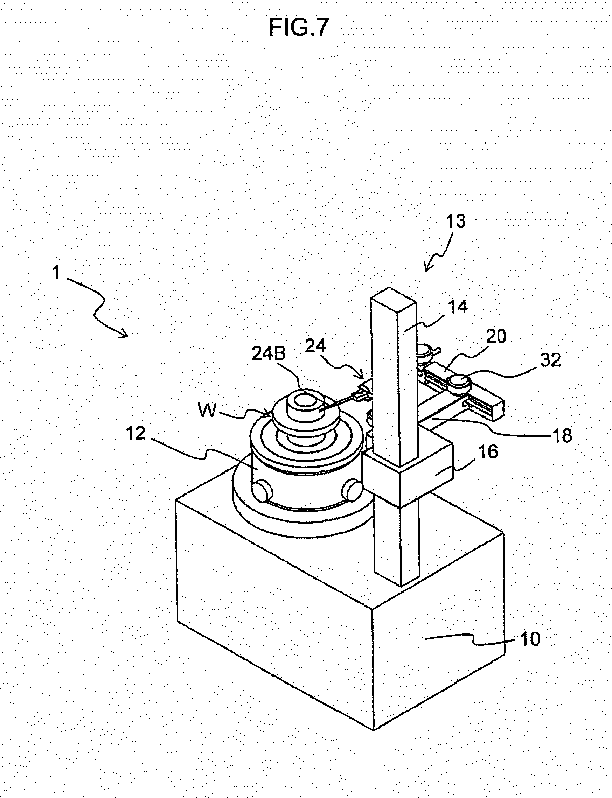

Further, as another method for bringing the tip end of the stylus 24B into contact with the upper side outer peripheral surface when the upper side outer peripheral surface of the workpiece W is the surface to be measured, the tip end of the stylus 24B may be brought into contact with the upper side outer peripheral surface by setting the turning arm 18 to a turning angle (90 degrees) that is rearward in the front-rear direction, and supporting the detector 24 such that the axial direction of the detector main body 24A is in the front-rear direction, as shown in Figure 6 and Figure 7.

The detector 24 is held by the detector holder 22 at a mounting angle at which the displacement direction of the stylus 24B is in the radial direction and the urging direction of the stylus 24B is in a direction opposite the direction toward the turning arm 18. The vertical position of the carriage 16 and the radial position of the radial direction moving arm 20 are set to positions at which the tip end of the stylus 24B contacts the upper side outer peripheral surface, which is the surface to be measured, of the workpiece W.

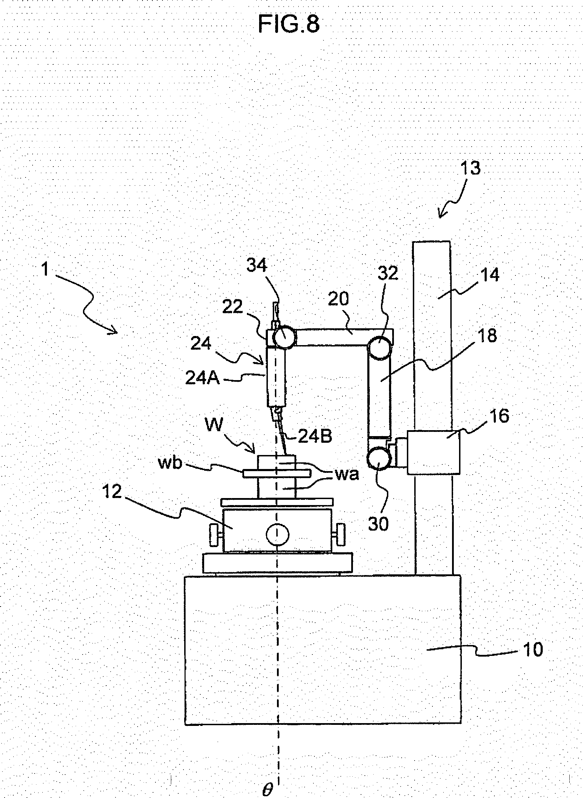

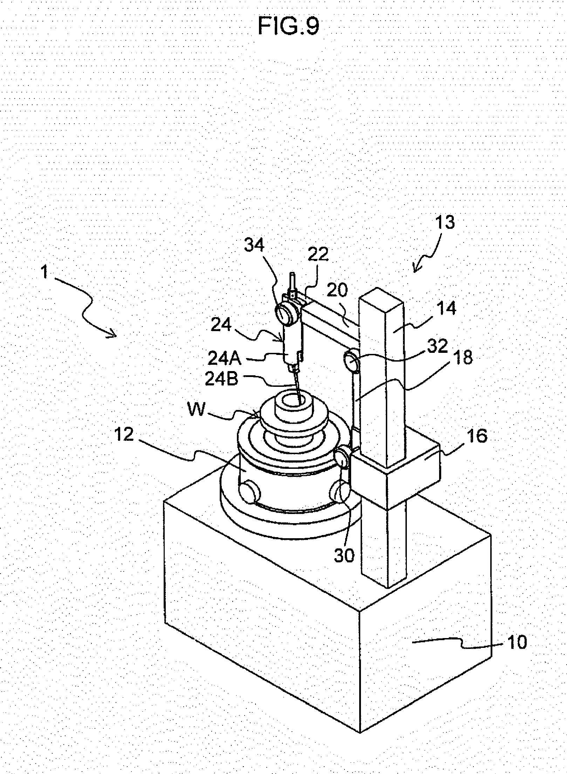

When an inner peripheral surface of the cylindrical portion wa of the workpiece W is the surface to be measured, the turning arm 18 is set to a turning angle (0 degrees) that is upward in the vertical direction (the Z axis direction), as shown in Figure 8 and Figure 9.

Also, the detector 24 is held by the detector holder 22 at a mounting angle at which the displacement direction of the stylus 24B is in the radial direction and the urging direction of the stylus 24B is in a direction toward the turning arm 18.

Then, the vertical position of the carriage 16 and the radial position of the radial direction moving arm 20 are set to positions at which the tip end of the stylus 24B contacts the inner peripheral surface, which is the surface to be measured, of the workpiece W.

Thus, the roundness and the like of the inner peripheral surface of the workpiece W can be measured by obtaining the displacement amount of the stylus 24B detected by the detector 24 while the workpiece W is rotated by the rotation of the stage 12, or the like.

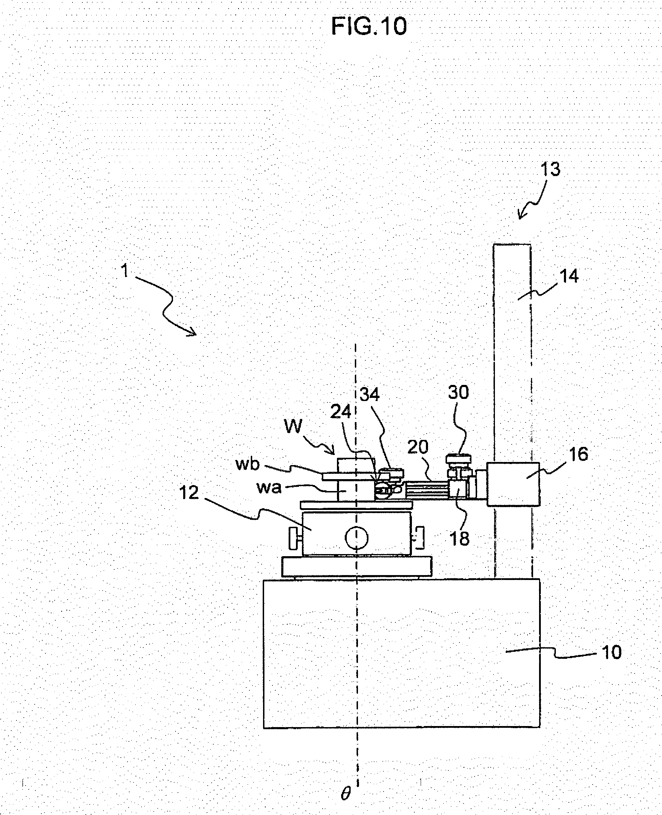

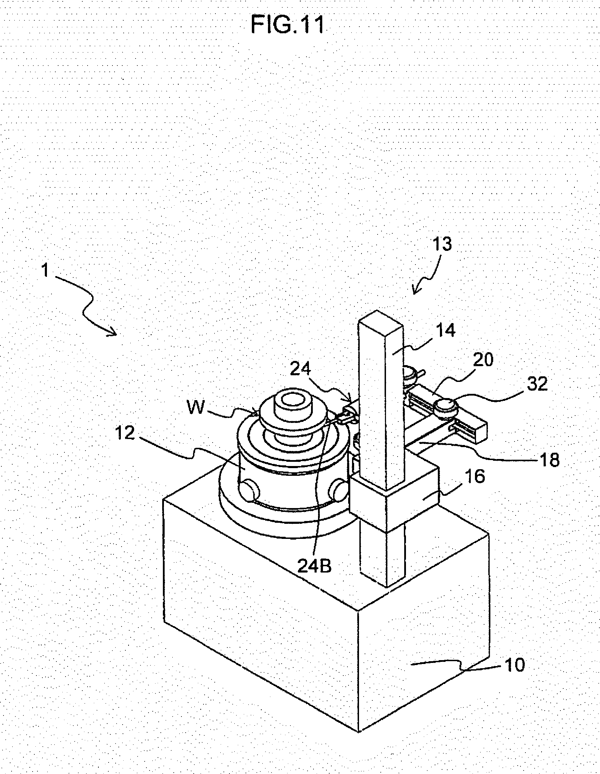

When an outer peripheral surface of the cylindrical portion wa of the workpiece W, which is an outer peripheral surface below the flange portion wb (i.e., a lower side outer peripheral surface), is the surface to be measured, the turning arm 18 is set to a turning angle (90 degrees) that is rearward in the front-rear direction, as shown in Figure 10 and Figure 11.

In addition, the detector 24 is held by the detector holder 22 at a mounting angle at which the displacement direction of the stylus 24B is in the radial direction and the urging direction of the stylus 24B is in a direction opposite the direction toward the turning arm 18.

Then, the vertical position of the carriage 16 and the radial position of the radial direction moving arm 20 are set to positions at which the tip end of the stylus 24B contacts the lower side outer peripheral surface, which is the surface to be measured, of the workpiece W.

Thus, the roundness and the like of the lower side outer peripheral surface of the workpiece W can be measured by obtaining the displacement amount of the stylus 24B detected by the detector 24 while the workpiece W is rotated by the rotation of the stage 12, or the like.

As described above, according to the detector supporting mechanism 13 of this embodiment, the tip end of the stylus 24B of the detector 24 can be brought into contact with any cylindrical surface of the workpiece W having a cylindrical shape or a columnar shape. Particularly, even when the surface to be measured is the cylindrical surface (the lower side outer peripheral surface in the above explanation) which cannot be brought into contact with the stylus 24B from the upper side of the workpiece W, the tip end of the stylus 24B can be brought into contact with the cylindrical surface by adjusting the turning angle of the turning arm 18.

The roundness measurement device 1 is not limited to measuring roundness and can also perform other measurements related to shape accuracy of a workpiece surface. For example, the roundness measurement device 1 can also measure flatness and the like of each of an upper surface and a lower surface of the flange portion wb of the workpiece W in Figure 1.

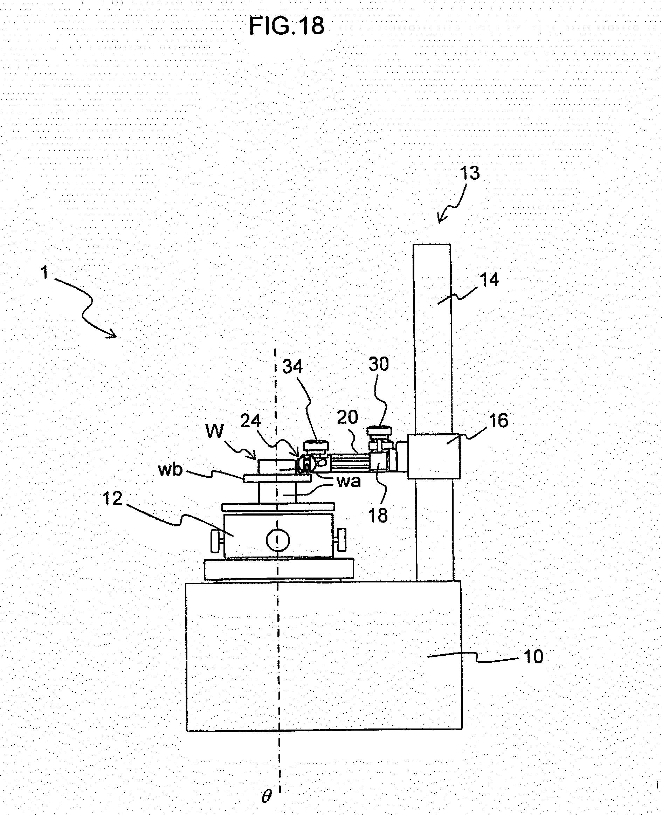

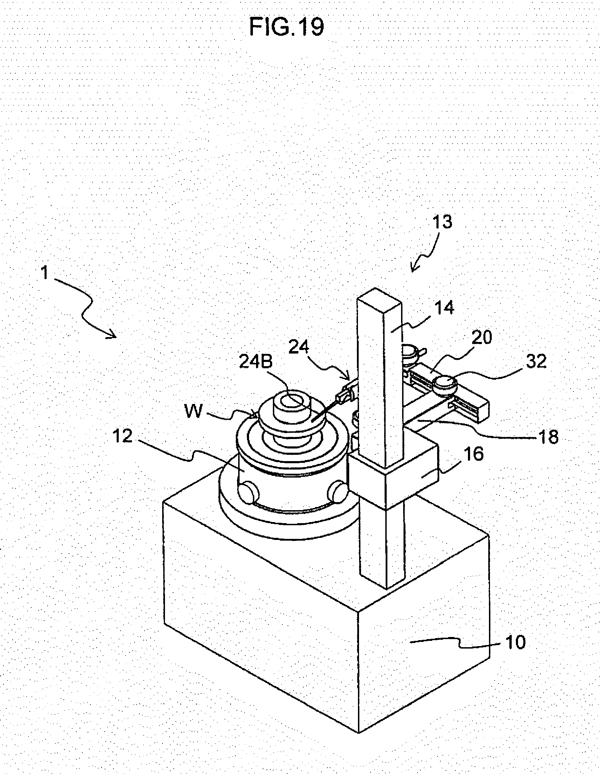

When an upper surface of the flange portion wb of the workpiece W is a surface to be measured and its flatness is measured, the turning arm 18 is set to a turning angle (90 degrees) that is rearward in the front-rear direction, as shown in Figure 18 and Figure 19.

In addition, the detector 24 is held by the detector holder 22 at a mounting angle at which the displacement direction of the stylus 24B is in the vertical direction and the urging direction of the stylus 24B is downward.

Then, the vertical position of the carriage 16 and the radial position of the radial direction moving arm 20 are set to positions at which the tip end of the stylus 24B contacts the upper surface, which is the surface to be measured, of the flange portion wb.

Thus, the flatness of the upper surface of the flange portion wb can be measured by obtaining the displacement amount of the stylus 24B detected by the detector 24 while the workpiece W is rotated by the rotation of the stage 12, or the like.

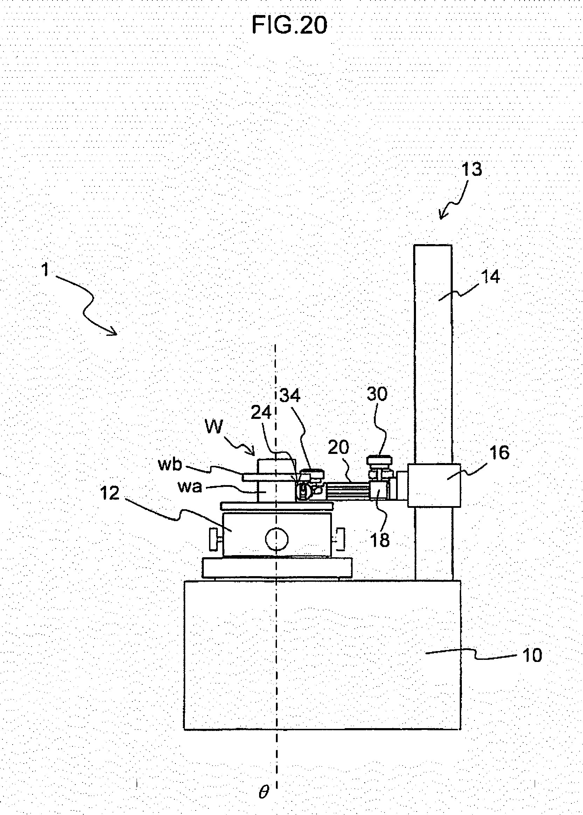

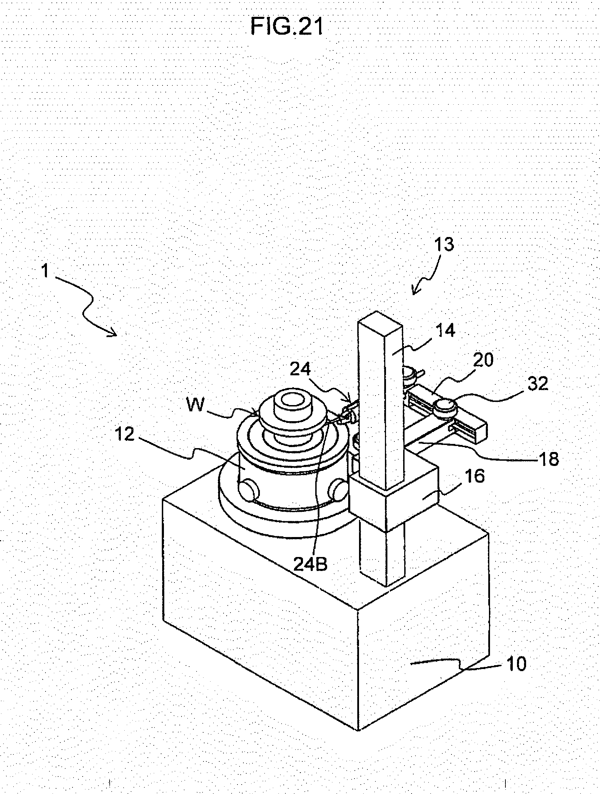

When a lower surface of the flange portion wb of the workpiece W is a surface to be measured and its flatness is measured, the turning arm 18 is set to a turning angle (90 degrees) that is rearward in the front-rear direction, as shown in Figure 20 and Figure 21.

Also, the detector 24 is held by the detector holder 22 at a mounting angle at which the displacement direction of the stylus 24B is in the vertical direction and the urging direction of the stylus 24B is upward.

Then, the vertical position of the carriage 16 and the radial position of the radial direction moving arm 20 are set to positions at which the tip end of the stylus 24B contacts the lower surface, which is the surface to be measured, of the flange portion wb.

Thus, the flatness of the lower surface of the flange portion wb can be measured by obtaining the displacement amount of the stylus 24B detected by the detector 24 while the workpiece W is rotated by the rotation of the stage 12, or the like.

Next, the effects of the detector supporting mechanism 13 of the roundness measurement device 1 of the embodiment will be described.

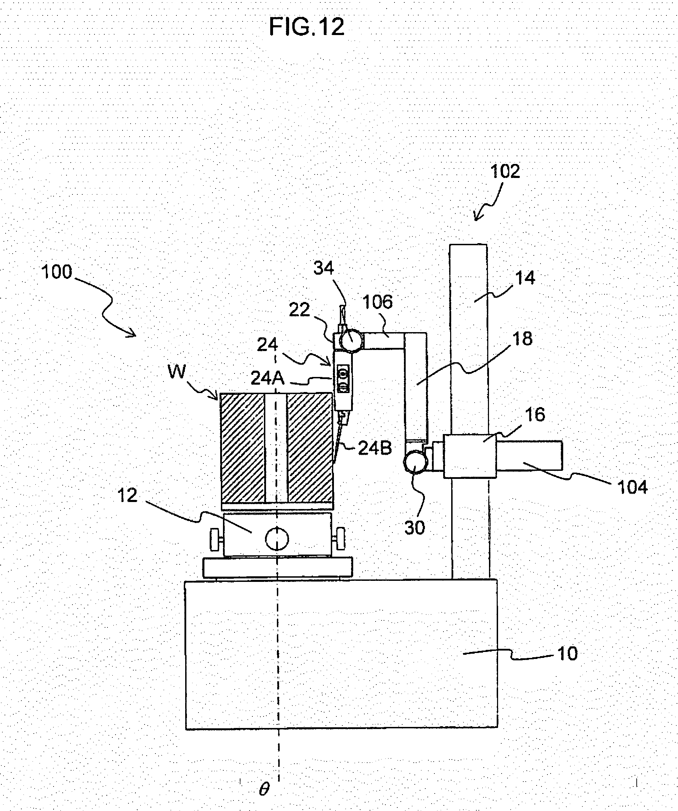

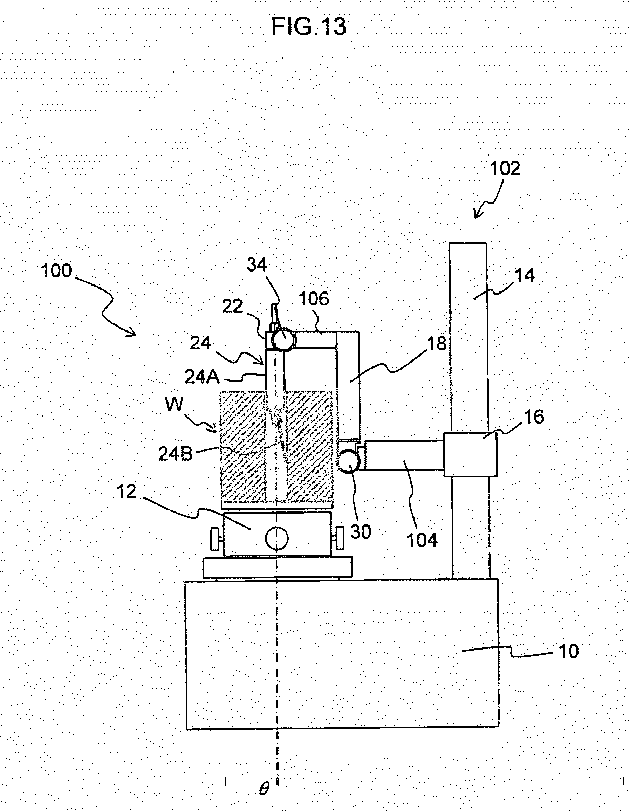

Figure 12 and Figure 13 are front views of a detector supporting mechanism 102 of a conventional non-claimed roundness measurement device 100. Constituent elements of the roundness measurement device 100 in these drawings that have the same or similar operation as constituent elements of the roundness measurement device 1 of the embodiment are designated by the same reference numerals, and descriptions of these constituent elements are omitted. Only those constituent elements that are different are described.

In the detector supporting mechanism 102 of the roundness measurement device 100 in these drawings, a radial direction moving arm 104 that extends in the radial direction is supported by the carriage 16 so as to be movable in the radial direction.

The turning arm 18 is connected to a tip end of the radial direction moving arm 104 in a manner that the turning arm 18 can turn around a pivot axis extending along the radial direction.

Further, a base end portion of a radial direction fixing arm 106 that extends along the radial direction is fixed to the tip end portion of the turning arm 18, instead of the radial direction moving arm 20 of the embodiment. The detector holder 22 is fixed to a tip end portion of the radial direction fixing arm 106.

In this detector supporting mechanism 102, when the outer peripheral surface or the inner peripheral surface of the workpiece W that has a cylindrical shape shown in a sectional view in Figure 12 and Figure 13 is a surface to be measured and its roundness of the like is measured, the turning arm 18 is set to a turning angle (0 degrees) that is upward in the vertical direction (the Z axis direction), similar to the detector supporting mechanism 13 of the embodiment.

In addition, when the detector 24 is held by the detector holder 22 such that the displacement direction of the stylus 24B is in the radial direction and the outer peripheral surface is the surface to be measured, the urging direction of the stylus 24B is set to be in a direction opposite a direction toward the turning arm 18 as in Figure 12. When the inner peripheral surface is the surface to be measured, the urging direction of the stylus 24B is set to be in a direction toward the turning arm 18 as shown in Figure 13.

Then, a position of the carriage 16 in the vertical direction and a position of the radial direction moving arm 104 in the radial direction are set to positions at which the tip end of the stylus 24B contacts the outer peripheral surface or the inner peripheral surface of the workpiece W, which is the surface to be measured.

Here, the workpiece W shown in Figure 12 and Figure 13 represents a workpiece having a maximum outer diameter and a minimum inner diameter that can be measured by the roundness measurement device 100. When bringing the tip end of the stylus 24B into contact with the outer peripheral surface of the workpiece W, the radial direction moving arm 104 is set to a position farthest from the rotation axis (θ axis) of the stage 12, within the movable range in the radial direction, as shown in Figure 12.

When bringing the tip end of the stylus 24B into contact with the inner peripheral surface of the workpiece W, the radial direction moving arm 104 is set to a position closest to the rotation axis (θ axis) of the stage 12, within the movable range in the radial direction, as shown in Figure 13.

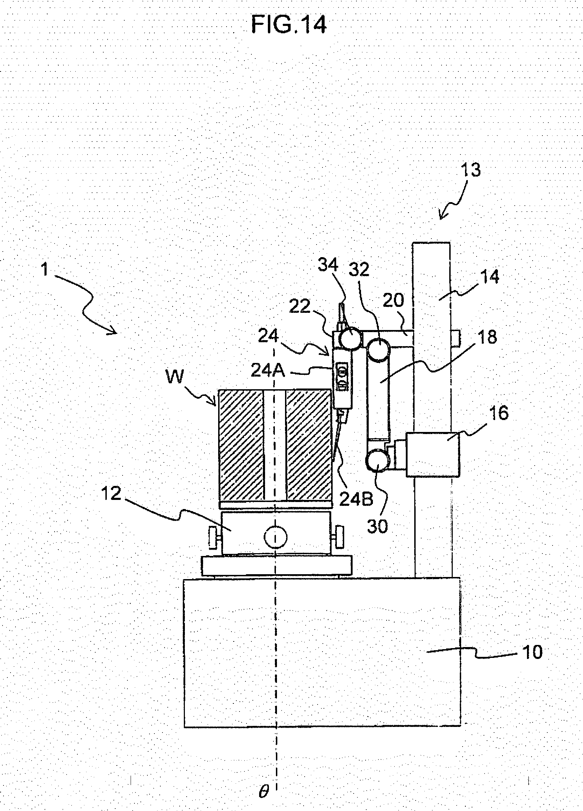

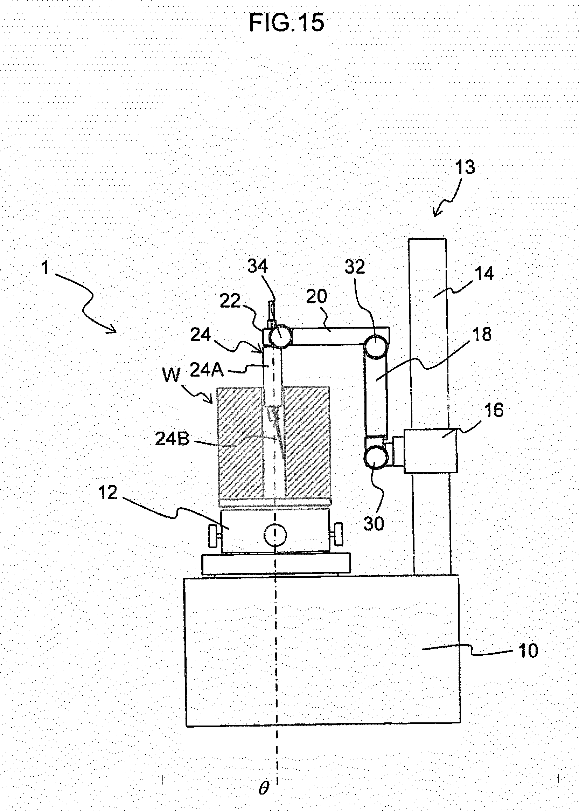

In contrast, Figure 14 and Figure 15 show the detector supporting mechanism 13 of the roundness measurement device 1 according to an embodiment of the invention which is designed to be measurable a workpiece W having the maximum measurable outer diameter and the minimum measurable inner diameter which are the same outer diameter and inner diameter as in Figure 12 and Figure 13. That is, when bringing the tip end of the stylus 24B into contact with the outer peripheral surface of the workpiece W, the radial direction moving arm 20 is set to a position farthest from the rotation axis (θ axis) of the stage 12, within the movable range in the radial direction, as shown in Figure 14.

When bringing the tip end of the stylus 24B into contact with the inner peripheral surface of the workpiece W, the radial direction moving arm 20 is set to a position closest to the rotation axis (θ axis) of the stage 12, within the movable range in the radial direction, as shown in Figure 15.

When comparing Figure 12 and Figure 14 in a case where the outer peripheral surface of the workpiece W is the surface to be measured, in the detector supporting mechanism 102 of the roundness measurement device 100 in Figure 12, the radial direction moving arm 104 protrudes greatly to the right side of the column 14. On the other hand, in the detector supporting mechanism 13 of the roundness measurement device 1 of the embodiment in Figure 14, the radial direction moving arm 20 does not protrude much at all to the right side of the column 14.

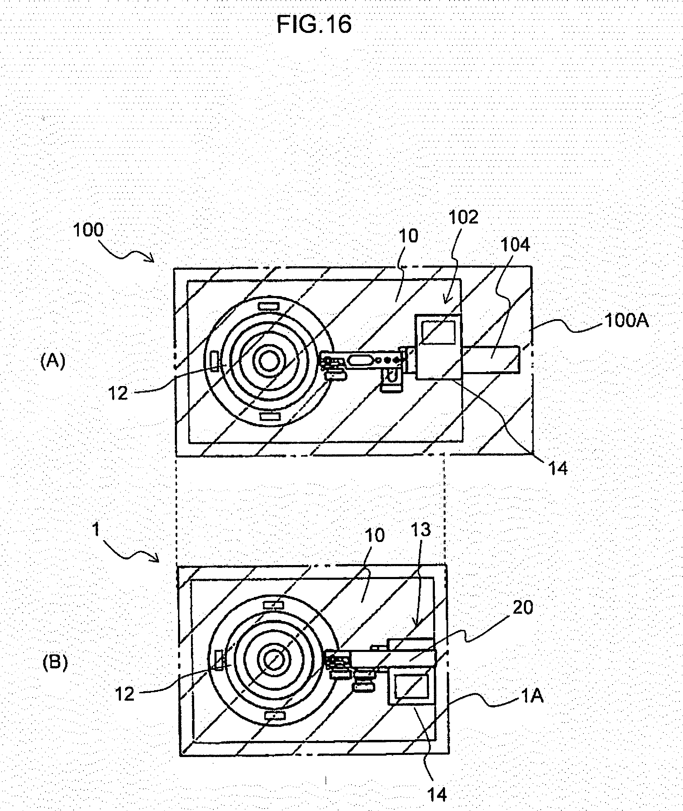

(A) portion in Figure 16 shows a state of Figure 12 from the upper surface side and (B) portion in Figure 16 shows a state of Figure 14 from the upper surface side. Therefore, as can be understood from comparison between (A) portion and (B) portion in Figure 16, a space (measurement space 1A) required for measurement in the roundness measurement device 1 of the embodiment is smaller in the left-right direction than the space (measurement space 100A) required in the conventional roundness measurement device 100 in Figure 12. That is, the area including all the constituent elements is reduced in the roundness measurement device 1 of the embodiment than in the roundness measurement device 100. Therefore, the roundness measurement device 1 of the embodiment can be made smaller.

Further, in the detector supporting mechanism 102 of the roundness measurement device 100 in Figure 12, it is necessary to provide a space to interpose the radial direction fixing arm 106 between the detector 24 (the outer peripheral surface of the workpiece W) and the column 14. In the detector supporting mechanism 13 of the roundness measurement device 1 of the embodiment in Figure 14, the distance between the detector 24 and the turning arm 18 is narrowed and the detector 24 can be moved close to the column 14. Thus, in the roundness measurement device 1 of the embodiment in Figure 14, there is no need to provide a space to interpose the radial direction fixing arm 106, so the size in the left-right direction of the base 10 can also be made smaller.

On the other hand, as is evident from comparing Figure 13 and Figure 15, even with the downsized roundness measurement device I of the embodiment in Figure 15, it is possible to measure the inner peripheral surface having the minimum inner diameter measurable with the roundness measurement device 100 in Figure 13. Therefore, the roundness measurement device 1 of the embodiment does not impose any limitations on the size of the inner diameter that can be measured with the roundness measurement device 100 in Figure 12 and Figure 13.

Heretofore, with the embodiment described above, the detector holder supporting mechanism which supports the detector holder 22 via an arm (a radial direction arm) that extends in the radial direction and is supported on a tip end portion of the turning arm 18, has a configuration including the radial direction moving arm 20 as one mode of the radial direction arm, the radial direction moving arm 20 configured to move in the radial direction so as to move the detector 24 (the detector holder 22) in the radial direction. Thereby, downsizing of the measurement space and the base 10 is attained, and thus, downsizing of the roundness measurement device 1 is attained. The present invention is not limited to the configuration of the embodiment described above. Similar effects as the effects of the embodiment described above can be obtained as long as the detector holder 22 is configured to be movable in the radial direction with respect to the turning arm 18.

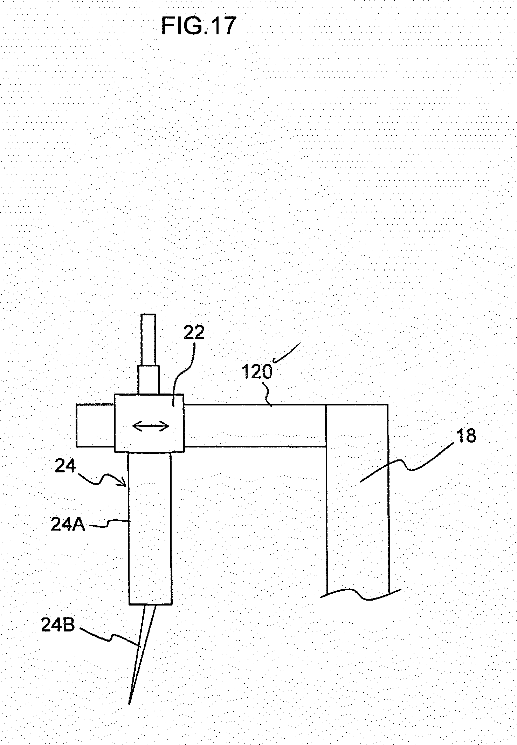

For example, according to claim 3 and as shown in Figure 17, the roundness measurement device has a configuration in which: the radial direction fixing arm 120 is provided instead of the radial direction moving arm 20 as one mode of the radial direction arm; a base end portion of the radial direction fixing arm 120 that extends along the radial direction is fixed to a tip end portion of the turning arm 18; and the detector holder 22 is configured to be movable in the radial direction with respect to the radial direction fixing arm 120. The mechanism for moving the detector holder 22 in the radial direction may have any configuration. The detector holder 22 may be moved manually, or may be moved by the driving of a motor.

### {Reference Signs List}

W ... workpiece, 1, 100 ... roundness measurement device, 10 ... base, 12 ... stage, 13, 102 ... detector supporting mechanism, 14 ... column, 16 ... carriage, 18 ... turning arm, 20, 104 ... radial direction moving arm, 22 ... detector holder, 24 ... detector, 24A ... detector main body, 24B ... stylus, 106 ... radial direction fixing arm

## Claims

1. A roundness measurement device (1) comprising:
a stage (12) configured to place an object to be measured (W) thereon and to be rotatable around a rotation axis;
a carriage (16) configured to be movable along a direction parallel to the rotation axis;
a first arm (18) supported by the carriage (16) and extending along a direction perpendicular to a radial direction of the rotation axis;
a second arm (20) supported movably in the radial direction on a tip end portion of the first arm (18) and extending in the radial direction; and
a detector holder (22) fixed to a tip end portion of the second arm (20) and configured to hold a detector (24).

2. The roundness measurement device (1) according to claim 1, wherein
the second arm (104) includes a rack gear (44) formed along the radial direction, and the first arm (18) includes a pinion gear (60) that engages with the rack gear (44).

3. A roundness measurement device (1), comprising:
a stage (12) configured to place an object to be measured (W) thereon and to be rotatable around a rotation axis;
a carriage (16) configured to be movable along a direction parallel to the rotation axis;
a first arm (18) supported by the carriage (16) and extending along a direction perpendicular to a radial direction of the rotation axis;
a second arm (120) fixed to a tip end portion of the first arm (18) and extending in the radial direction; and
a detector holder (22) supported movably in the radial direction on a tip end portion of the second arm (120) and configured to hold a detector (24).

## Patentansprüche

1. Rundungsmessvorrichtung (1), mit:
einer Halterung (12), die ausgebildet ist, auf ihr ein zu messendes Objekt (W) anzuordnen, und die um eine Drehachse drehbar ist;
einem Wagen (16), der so ausgebildet ist, dass er entlang einer Richtung parallel zu der Drehachse bewegbar ist;
einem ersten Arm (18), der von dem Wagen (16) gehalten wird und entlang einer Richtung verläuft, die senkrecht zu einer radialen Richtung der Drehachse ist;
einem zweiten Arm (20), der auf einem vorderen Endbereich des ersten Arms (18) so gehalten wird, dass er in der radialen Richtung drehbar ist und in der radialen Richtung verläuft; und
einem Detektorhalter (22), der an einem vorderen Endbereich des zweiten Arms (20) befestigt ist und zum Halten eines Detektors (24) ausgebildet ist.

2. Rundungsmessvorrichtung (1) nach Anspruch 1, wobei
der zweite Arm (104) eine Zahnstange (44) aufweist, die entlang der radialen Richtung ausgebildet ist, und der erste Arm (18) ein Zahnrad (60) aufweist, das mit der Zahnstange (44) in Eingriff ist.

3. Rundungsmessvorrichtung (1), mit:
einer Halterung (12), die ausgebildet ist, auf ihr ein zu messendes Objekt (W) anzuordnen, und die um eine Drehachse drehbar ist;
einem Wagen (16), der so ausgebildet ist, dass er entlang einer Richtung parallel zu der Drehachse bewegbar ist;
einem ersten Arm (18), der von dem Wagen (16) gehalten wird und entlang einer Richtung senkrecht zu einer radialen Richtung der Drehachse verläuft;
einem zweiten Arm (120), der an einem vorderen Endbereich des ersten Arms (18) befestigt ist und in der radialen Richtung verläuft; und
einem Detektorhalter (22), der auf einem vorderen Endbereich des zweiten Arms (120) so gehalten wird, dass er in der radialen Richtung bewegbar ist, und der zum Halten eines Detektors (24) ausgebildet ist.

## Revendications

1. Dispositif de mesure de rotondité (1) comprenant:
une platine (12) configurée pour y placer un objet à mesurer (W) et pouvant tourner autour d'un axe de rotation;
un chariot (16) configuré pour être mobile dans une direction parallèle à l'axe de rotation;
un premier bras (18) supporté par le chariot (16) et s'étendant le long d'une direction perpendiculaire à une direction radiale de l'axe de rotation;
un second bras (30) supporté de manière mobile dans la direction radiale sur une partie d'extrémité du premier bras (18) et s'étendant dans la direction radiale; et
un support de détecteur (22) fixé à une partie d'extrémité de pointe du second bras (20) et configuré pour contenir un détecteur (24).

2. Dispositif de mesure de rotondité (1) selon la revendication 1 , dans lequel
le second bras (20) comprend un engrenage à crémaillère (44) formé le long de la direction radiale, et le premier bras (18) comprend un engrenage à pignon (60) qui s'engage dans l'engrenage à crémaillère (44).

3. Dispositif de mesure de rotondité (1) comprenant:
une platine (12) configurée pour y placer un objet à mesurer (W) et pouvant tourner autour d'un axe de rotation;
un chariot (16) configuré pour être mobile dans une direction parallèle à l'axe de rotation;
un premier bras (18) supporté par le chariot (16) et s'étendant le long d'une direction perpendiculaire à une direction radiale de l'axe de rotation;
un second bras (20) supporté de manière mobile dans la direction radiale sur une partie d'extrémité du premier bras (18) et s'étendant dans la direction radiale; et
un support de détecteur (22) supporté de manière mobile dans la direction radiale sur une partie d'extrémité de pointe du second bras (20) et configuré pour contenir un détecteur (24).
